(19) Europäisches Patentamt
European Patent Office
Office européen des brevets

(11) Veröffentlichungsnummer: **0 150 003**
**B1**

(12) # EUROPÄISCHE PATENTSCHRIFT

(45) Veröffentlichungstag der Patentschrift: **12.08.87**

(51) Int. Cl.⁴: **C 08 F 2/24,** C 08 F 257/02, D 21 H 3/38 // (C08F257/02, 212:08, 220:02)

(21) Anmeldenummer: **85100115.6**

(22) Anmeldetag: **07.01.85**

(54) **Kationisches Leimungsmittel für Papier und Verfahren zu seiner Herstellung.**

(30) Priorität: **18.01.84 DE 3401573**

(43) Veröffentlichungstag der Anmeldung: **31.07.85 Patentblatt 85/31**

(45) Bekanntmachung des Hinweises auf die Patenterteilung: **12.08.87 Patentblatt 87/33**

(84) Benannte Vertragsstaaten: **CH DE FR GB IT LI SE**

(56) Entgegenhaltungen:
**EP-A-0 058 313**
**DE-A-1 546 236**
**DE-A-2 814 527**
**DE-A-3 047 688**
**GB-A-2 013 221**

(73) Patentinhaber: **BAYER AG, Konzernverwaltung RP Patentabteilung, D-5090 Leverkusen 1 Bayerwerk (DE)**

(72) Erfinder: **Probst, Joachim, Dr., Humperdinckstrasse 42, D-5090 Leverkusen (DE)**
Erfinder: **Beck, Ulrich, Dr., Weiherstrasse 17, D-5303 Bornheim 3 (DE)**
Erfinder: **Bäumgen, Heinz, Buchenweg 10, D-5090 Leverkusen (DE)**

**EP 0 150 003 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft wäßrige, kolloiddisperse Papierleimungsmittel auf der Basis von Copolymerisaten aus Acrylnitril und/oder Methacrylnitril, Styrol und Acrylsäure- oder Methacrylsäureestern, die in Gegenwart von chemisch einheitlich aufgebauten, quaternierten Terpolymeren aus N,N-Dimethylaminoethyl(meth)acrylat, Styrol und Acrylnitril als Emulgatoren polymerisiert werden.

Es ist bekannt (vgl. DE-OS 1 621 688), kationische Papierleimungsmittel dadurch herzustellen, daß man die wäßrige Lösung eines in Salzform vorliegenden Polykations auf der Basis von Maleinsäureanhydrid und anderen Comonomeren mit einem wäßrigen Emulsionshomopolymerisat oder -copolymerisat mischt. Die so hergestellten Mischungen sind jedoch im allgemeinen instabil und neigen zu Sedimentabscheidungen, die bei der Papierherstellung störend wirken, denn unter anderem kann hierbei eine inhomogene Leimung des Papiers resultieren.

In der DE-OS 2 814 527 wird die Darstellung eines Leimungsmittels für Papier beschrieben, das in Gegenwart eines mit Epihalogenhydrin quaternierten Polymeren kationischen Emulgators aus N,N-Dimethylaminoalkyl(meth)acrylat und substituiertem bzw. unsubstituiertem Styrol, gegebenenfalls unter Zusatz eines Hilfsemulgators der Formel

$$R\text{-}O\text{-}(CH_2\text{-}CH_2\text{-}O)_n\, SO_3^{\ominus}\, M^{\ominus} \qquad (I)$$

worin

R einen höheren aliphatischen oder cycloaliphatischen Kohlenwasserstoffrest,

$M^{\ominus}$ ein einwertiges Metallkation oder Ammonium und

n eine ganze Zahl $\geqslant$ 2 bedeuten,

hergestellt worden ist. In Gegenwart dieser polymeren Emulgatoren werden hydrophobe Monomere, wie Styrol, Styrolderivate, Acrylsäureester und/oder Methacrylsäureester in wäßrigem Medium polymerisiert. In einer bevorzugten Ausführungsform wird eine Mischung von 23,5 Gew-.-% Dimethylaminoethylmethacrylat und 76,5 Gew.-% Styrol in Isopropanol polymerisiert. Anschließend wird mit Essigsäure angesäuert, in Wasser gelöst und danach mit Epichlorhydrin bei einer Temperatur von 80 bis 85°C quaterniert. Das so hergestellte emulgierfähige Polykation wird danach zur wäßrigen Emulsionspolymerisation eines Gemischs von Styrol und 2-Ethylhexylacrylat (Gewichtsverhältnis 3:1) eingesetzt, wobei das Gewichtsverhältnis des Emulgators zum Monomergemisch 1:2 beträgt. Als anionisches Hilfsdispergiermittel kommt eine Verbindung (1) mit $M = NH_4$ zum Einsatz und als Initiator wäßriges Wasserstoffperoxid. Die so erhaltenen Polymerisate stellen optisch trübe, aber dennoch relativ stabile Dispersionen dar. Wenn man jedoch den Gehalt an basischen Monomeren in der Polymeren kationischen Emulgatorkomponente auf 20 Gew.-% und darunter absenken will, werden die Dispersionen sehr schnell grobteiliger, instabiler und neigen zu Polymerausfall. Die auftretenden Polymerabscheidungen führen meist zu einer erheblichen Verschlechterung des Leimungseffektes sowie zu Störungen im Arbeitsablauf bei der Papierproduktion.

In der Europäischen Patentschrift Nr. 0 058 313 werden stabile kolloiddisperse, meist durchscheinende Lösungen beschrieben, bei denen man Acrylnitril oder Methacrylnitril mit Acrylsäure- oder Methacrylsäureestern in Gegenwart von speziellen polymeren kationischen Emulgatoren im wäßrigen System polymerisiert. Diese Emulgatoren sind Quaternierungsprodukte von chemisch sehr einheitlich aufgebauten Terpolymeren aus N,N-Dimethylaminoethyl(meth)acrylat, Styrol und Acrylnitril mit Gehalten an basischem Comonomer von höchstens 40 Gew.-%. Die mittleren Teilchendurchmesser dieser kolloiddispersen Lösungen liegen zwischen 15 und 200 nm vorzugsweise zwischen 20 und 150 nm Ein Nachteil dieser kolloiddispersen Leimungsmittel ist ihre nicht voll befriedigende Wirksamkeit auf speziellen Papiersorten wie z. B. den sogenannten Schrenzpapieren. Bei diesen Schrenzpapieren handelt es sich um Altpapiersorten, die hauptsächlich aus Karton- und Zeitschriftenabfällen gewonnen werden und wiederum zu Kartons verarbeitet werden. Hierbei werden sie meist als sogenannte Liner eingesetzt, die mit Stärke und kationischen Oberflächenleimungsmitteln behandelt werden müssen, um eine gute Festigkeit sowie wasserabweisende Eigenschaften zu erhalten.

Es wurde nun überraschenderweise gefunden, daß man stabile, kolloiddisperse, für Schrenzpapier hervorragend wirksame Papierleimungsmittel erhält, wenn man entweder Mischungen von (Meth)acrylnitril, Styrol und Acrylsäure- oder Methacrylsäureester oder Mischungen von Styrol und Acrylsäure- oder Methacrylsäureester in Gegenwart der schon genannten chemisch einheitlich aufgebauten quaternierten Terpolymerisaten polymerisiert.

Das erfindungsgemäße Papierleimungsmittel wird als kolloiddisperse Lösung mit mittleren Teilchendurchmessern von 15 bis 200 nm erhalten, indem man in einem wäßrigen Medium eine wasserlösliche kationische, chemisch einheitlich aufgebaute Terpolymerverbindung aus

a) 7 bis 40, vorzugsweise 8 bis 30 Gew.-% N,N-Dimethylaminoethylacrylat und/oder -methacrylat,

b) 40 bis 80 Gew.-% Styrol und

c) 4 bis 40, vorzugsweise 5 bis 35 Gew.-% Acrylnitril auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-% - bezogen auf das folgende Monomergemisch - dieses Emulgators

d) 0 bis 90, vorzugsweise 0 bis 70 Gew.-% Acrylnitril und/oder Methacrylnitril,

e) 5 bis 95, vorzugsweise 10 bis 80 Gew.-% Styrol und

f) 5 bis 95, vorzugsweise 10 bis 80 Gew.-% Acrylsäure- und/oder Methacrylsäureester mit 1 bis 12 C-Atomen im Alkoholrest

- wobei die Summe der Komponenten d) bis f) stets 100 Gew.-% beträgt - emulgiert und die so erhaltene Emulsion einer radikalisch initiierten Emulsionspolymerisation bei Temperaturen von 20 bis 150° C unterwirft.

Vorzugsweise beträgt das Gewichtsverhältnis zwischen polymerem, kationischem Emulgator und Monomergemisch aus d), e) und f) 1:4 bis 1:1.

Das Papierleimungsmittel gemäß der Erfindung wird auch erhalten, wenn man neben dem genannten kationischen Emulgator einen kationischen und/oder nichtionogenen Hilfsemulgator in Mengen von 1 bis 40 Gew.-%, vorzugsweise 3 bis 20 Gew.-%, bezogen auf den vorstehenden kationischen Emulgator einsetzt, wobei der nichtionogene Emulgator die Formel

$$R_1\text{-}X\text{-}(CH_2\text{-}CH_2\text{-}O)_n\text{-}H \qquad (II)$$

besitzt, worin

X O, NH oder COO bedeutet,

$R_1$ ein höherer aliphatischer, cycloaliphatischer, araliphatischer oder aromatischer Kohlenwasserstoffrest mit 6 - 30 C-Atomen ist, und

n eine ganze Zahl $\geq$ 2 ist,

und wobei der kationische Hilfsemulgator die Formel

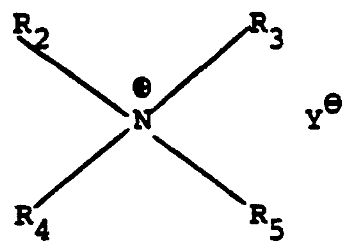

(III)

besitzt, wobei

$R_2$ und $R_3$ höhere aliphatische bzw. araliphatische Kohlenwasserstoffreste mit 6 bis 20 C-Atomen,

$R_4$ und $R_5$ niedere aliphatische Kohlenwasserstoffreste mit 1 bis 6 C-Atomen und

$Y^{\ominus}$ ein Halogenidion darstellen.

Das chemisch sehr einheitlich aufgebaute Terpolymere aus N,N-Dimethylaminoethyl(meth)acrylat, Styrol und Acrylnitril wird im organischen Medium vor der Zugabe von Säuren quaterniert. Anschließend erfolgt die Säurezugabe und die Auflösung zu wäßrigen Lösungen mit einer Konzentration von 10 bis 30 Gew.-%, vorzugsweise 15 bis 25 Gew.-%. Die so erhaltenen Emulgatorlösungen können nun noch destillativ von organischem Lösungsmittel befreit werden; die Entfernung des organischen Lösungsmittels ist jedoch nicht notwendig, da das Lösungsmittel im weiteren Reaktionsverlauf der Emulsionspolymerisation im allgemeinen nicht stört.

Für die Emulgierung reicht es aus, wenn man die quaternierten kationischen Terpolymeren ohne weitere Zusätze für die Emulsionspolymerisation einsetzt. In manchen Fällen erweist es sich jedoch als recht günstig, wenn man zusammen mit dem Polymeren kationischen Emulgator oligomere nichtionogene und/oder niedermolekulare kationische Hilfsemulgatoren in Mengenverhältnissen von 1 bis 40 Gew.-%, vorzugsweise 3 bis 20 Gew.-%, bezogen auf den kationischen Emulgator einsetzt.

Als nichtionogene Hilfsemulgatoren eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z. B. Ethylenoxid.

Beispiele dafür sind Umsetzungsprodukte von Ethylenoxid mit Carbonsäuren wie z. B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z. B. substituierten Benzyl-, Phenylphenolen, Nonylphenol und mit längerkettigen Aminen wie z. B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Als kationische, niedermolekulare Hilfsemulgatoren sind quaternierte Ammoniumsalze, wie z. B. Benzyldodecyl-dimethyl-ammoniumchlorid, geeignet. Die genannten Hilfsemulgatoren bewirken eine zusätzliche Emulgierung des Monomergemischs und in manchen Fällen eine Stabilitätssteigerung der kolloiddispersen Leimungsmittel. Ein Einsatz mit zu hohen Mengen an diesen Hilfsdispergatoren ist jedoch nicht anzuraten, da dann leicht unerwünschtes Schäumen auftreten kann.

Als Acrylsäure- bzw. Methacrylsäureester, die bei der radikalischen Emulsionscopolymerisation als Comonomere eingesetzt werden, sind vorzugsweise solche Verbindungen geeignet, die mit den Acrylnitril/Styrol- oder Methacrylnitril/Styrol-Gemischen bzw. mit Styrol allein Copolymerisate mit Filmbildungstemperaturen unterhalb von 100° C bilden.

Copolymere, die aufgrund der Lage ihres Glaspunkts höhere Filmbildungstemperaturen aufweisen, besitzen

nur eine unzureichende Leimungswirkung. Prinzipiell geeignet sind Acrylate wie Methyl-, Ethyl-, n-Butyl- und 2-Ethylhexylacrylat sowie Methacrylate wie Methylmethacrylat und n-Butylmethacrylat. Sie können einzeln oder in Mischungen mit Acrylnitril/Styrol, Methacrylnitril/Styrol bzw. Styrol allein copolymerisiert werden. Der Gehalt an Styrol kann zwischen 5 und 95 %, vorzugsweise 10 bis 80 Gew.-% liegen, der von Acrylnitril bzw. Methacrylnitril zwischen 0 und 90 Gew.-%, vorzugsweise zwischen 0 und 70 Gew.-%. Einstellungen mit zu wenig Styrol bzw. (Meth)acrylnitril/Styrol im Copolymerisat können aufgrund ihrer Klebrigkeit bei der Papierherstellung stören, bei Einstellungen mit sehr viel Styrol bzw. Styrol/(Meth)acrylnitril ist die Leimung des Papiers ungenügend.

Als Initiatoren für die Emulsionspolymerisation kommen bevorzugt wasserlösliche, Radikale liefernde nichtionogene Peroxide wie Wasserstoffperoxid und t-Butylhydroperoxid sowie wasserlösliche Azoverbindungen, wie sie z. B. in der DE-OS 2 841 045 beschrieben sind, in Betracht. Weiterhin sind Redoxsysteme geeignet, die aus peroxidischen Initiatoren und Reduktionsmitteln wie Aminen, Polyaminen, Thioharnstoff, Eisen-II-salzen usw. bestehen. Als Initiatoren kommen auch wasserunlösliche Initiatoren, wie Azoisobutyronitril und Benzoylperoxid, in Betracht. Letzere sind dann praktisch nur in der organischen Phase gelöst. Die genannten Initiatoren werden in Mengen von 0,1 bis 5 Gew.-%, bevorzugt 0,3 bis 3,0 Gew -% bezogen auf das Monomergemisch, hinzugegeben.

Zur Regelung der Molekulargewichte der Polymeren können noch übliche Regler eingesetzt werden, z. B. n-Dodecylmercaptan, Diisopropylxanthogendisulfid, Thioglykol und Thioglycerin. Sie werden in Mengen von 0,1 bis 2 Gew.-%, bezogen auf die Monomermischung, zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden. Besonders bevorzugt sind das kontinuierliche und das Zulaufverfahren. Bei letzerem wird unter Stickstoffatmosphäre Wasser zusammen mit einem Teil oder dem gesamten Emulgatorsystem und gegebenenfalls einem Teil des Monomergemischs vorgelegt, auf die Polymerisationstemperatur von 20 bis 150° C, vorzugsweise 50 bis 100° C, erhitzt und das Monomergemisch sowie der Initiator und gegebenenfalls Emulgator innerhalb von 0,5 bis 10 Stunden, bevorzugt 1 bis 6 Stunden, zugetropft.

Nach einiger Zeit wird nachaktiviert und die Reaktion bis zu einem Umsatz von ca. 99,0 % bis 99,9 Gew.-% vervollständigt. Das Gewichtsverhältnis Emulgator zu Polymer beträgt hierbei 1:9 bis 7:3, vorzugsweise 1:4 bis 1:1. Restmonomere sowie eventuell noch vorhandenes organisches Lösungsmittel werden im Anschluß an die Emulsionscopolymerisation im Vakuum destillativ entfernt. Danach wird soviel Wasser zugesetzt, bis eine ca. 10 bis 35 gew.-%ige wäßrige kolloiddisperse Lösung resultiert. Die Viskosität dieser Dispersionen, gemessen in einem Rotationsviskosimeter bei 20° C, liegt im allgemeinen unterhalb von 50 mPa.s. Die mittels Laser-Streulicht-Spektroskopie gemessenen mittleren Teilchendurchmesser liegen je nach Reaktionsbedingungen zwischen 15 und 200 nm vorzugsweise zwischen 20 und 150 nm. Dispersionen mit Teilchengrößen unter 50 erscheinen transparent, während solche mit größeren Teilchen trüber erscheinen. Auch die Stabilität der Dispersionen mit Teilchengrößen unter 100 nm, ist besser als die mit Teilchengrößen über 100 nm was z. B. durch thermische Belastung bei Temperaturen über 50° C gezeigt werden kann. Bei grobteiligeren Dispersionen ist meist der Anteil an Sedimenten erheblich höher als bei feinteiligen.

Führt man hingegen Emulsionspolymerisationen gemäß der DE-OS 2 814 527 mit kationischen Dispergatoren aus, bei denen der Gehalt an basischen Comonomeren bei höchstens 20 Gew.-% liegt, so resultieren relativ instabile, grobteilige Dispersionen mit mittleren Teilchengrößen zwischen 200 und 300 nm.

Die Stabilität der erfindungsgemäßen kolloiddispersen Leimungsmittel wird auch durch Pfropfanteile des Polymeren auf den in relativ großen Mengen vorhandenen polymeren Emulgator erhöht. Solche Pfropfreaktionen, die durch Übertragungsreaktionen durch den Emulgator ausgelöst werden, sind in der Literatur bekannt (vgl. H. Gerrens, Fortschritte der Hochpolymer-Forschung, Band I, (1959) Seite 300).

Die erfindungsgemäßen Leimungsmittel für Papier sind nach allen bei der Papierherstellung für die Oberflächen- und Masseleimung gebräuchlichen Arbeitsmethoden einsetzbar.

Die Vorteile gegenüber Leimungsmitteln gemäß DE-OS 1 621 688, einer relativ instabilen Mischung eines kationischen Latex mit einem Polykation auf der Basis Styrol und Maleinsäureanhydrid, sind die weitgehende pH-Unabhängigkeit der Leimungswirkung, die geringe Neigung zu Abscheidungen in Form von Sedimenten und die geringe Schaumneigung. Die sehr stabilen transparenten bzw. nur wenig trüben kolloiddispersen Lösungen der erfindungsgemäßen kationischen Leimungsmittel für Papier sind im Gegensatz zu den instabilen Dispersionen gemäß DE-OS 1 621 688 problemlos zu verarbeiten. Sie garantieren absolute Homogenität des geleimten Papiers und zeigen auf praktisch allen Papieren gute bis hervorragende Leimungswirkung, wobei insbesondere die Leimung von aluminiumsulfatfreiem Papier hervorzuheben ist. Hierbei ist besonders die hervorragende Leimung von kreidehaltigem Papier zu erwähnen.

Gegenüber den Dispersionen gemäß EP-PS 0 058 313 ist die hervorragende Leimung von Schrenzpapier zu erwähnen, wie in den folgenden Beispielen erläutert wird.

**Beispiel 1**

**Herstellung der kationischen Emulgatoren**

In einem 40 l Rührautoklaven werden 5720 g Isopropanol vorgelegt. Der Autoklav wird gründlich mit

Stickstoff gespült und danach auf 80°C hochgeheizt. Bei dieser Temperatur werden die Mischungen I und die Lösungen II der Tabelle I innerhalb von ca. 4 Stunden unter Luftausschluß zudosiert. Dann wird 1 bis 2 Stunden nachgerührt, danach mit III nachaktiviert. Daraufhin wird ca. 6 bis 12 Stunden bei 80°C gerührt.

Nach der Terpolymerisation wird auf 40°C bzw. auf 50°C abgekühlt und die in Tabelle I angegebenen Mengen an Quaternierungsmitteln (IV) zudosiert. Es wird 1 bis 5 Stunden bei 40 bzw. 50°C nachgerührt und danach mit den ebenfalls in Tabelle I angegebenen Mengen an Essigsäure versetzt. In einem 120 I Vorratsgefäß, das mit einem Rührer versehen ist, werden ca. 63 - 65 I entionisiertes Wasser von einer Temperatur von ca. 60°C vorgelegt und der Inhalt des 40 I Autoklaven hiermit vereinigt.

Die Herstellung einer homogenen wäßrigen Lösung erfolgt bei intensivem Rühren in kurzer Zeit. Die wäßrigen Lösungen, die noch organisches Lösungsmittel enthalten, besitzen die ebenfalls in Tabelle I verzeichneten Eigenschaften.

**Tabelle I**

| Emulgator | | A | B | C | D |
|---|---|---|---|---|---|
| Polymerisationstemperatur (°C) | | 80 | 80 | 80 | 80 |
| Temperatur hei der Quaternierung (°C) | | 40 | 40 | 50 | 50 |
| I. | N,N-Dimethylaminoethylmethacrylat (g) | 3217 | 2257 | 3217 | 3217 |
| | Styrol (g) | 10224 | 10608 | 10224 | 10224 |
| | AcryLnitril (g) | 2644 | 3219 | 2644 | 2644 |
| II. | Azoisobutyronitril (g) | 530 | 600 | 590 | 590 |
| | Aceton (g) | 3000 | 3000 | 3000 | 3000 |
| III. | Azoisobutyronitril (g) | 75 | 75 | 70 | 70 |
| | Aceton (g) | 300 | 300 | 300 | 300 |
| IV. | Epichlorhydrin (g) | 1896 | 1330 | - | - |
| | Chloressigsäureethylester (g) | - | - | 1887 | - |
| | Allylchlorid (g) | - | - | - | 1254 |
| V. | Essigsäure (g) | 2630 | 2630 | 2370 | 2370 |
| | Konzentration (Gew.-%) | 20,2 | 20,4 | 20,7 | 20,3 |
| | Viskosität (bei 20°C) (mPa.s)+) | 70-100 | 550-820 | 250-350 | 400-550 |
| | pH-Wert | 3,5 | 3,7 | 3,0 | 3,2 |
| | Umsatz bezogen auf die Monomermischung (Gew.-%) | 99,5 | 99,7 | 99,6 | 99,8 |
| | Aussehen der Emulgatorlösung | klar | klar | klar | klar |

+) die Viskosität ist keine Konstante; da Strukturviskosität vorliegt.

**Beispiele 2 bis 4**

In einem 2 I-Vierhalskolben mit Rührer, Rückflußkühler, Gaseinlaß und -auslaß werden 400 g entionisiertes Wasser vorgelegt. Danach wird unter Stickstoffatmosphäre gründlich ausgekocht und auf 70°C abgekühlt. Danach werden die Emulsionen I (vgl. Tabelle II) zur Vorlage hinzugegeben und anschließend Stickstoff übergeleitet. Danach wird 0,7 g einer 35 %igen Wasserstoffperoxidlösung zugegeben. Nach ca. 15 - 30 Minuten werden die Mischungen II und 8 g einer 35 %igen Wasserstoffperoxidlösung, die mit 100 g entionisiertem Wasser verdünnt ist, gleichzeitig in 2 bis 3 Stunden zudosiert. Danach wird noch 2 bis 5 Stunden nachgerührt, anschließend wird mit 1 bis 2 g Wasserstoffperoxidlösung (35 %) nachaktiviert und noch ca. 2 bis 10 Stunden nachpolymerisiert. Danach werden im Wasserstrahlvakuum ca. 50 bis 150 ml eines Gemisches aus Wasser, organischem Lösungsmittel (Isopropanol und Aceton) und Restmonomeren abdestilliert und durch 50 bis 150 ml entionisiertes Wasser ersetzt. Die physikalisch-chemischen Eigenschaften der so erhaltenen kolloiddispersen Lösungen sind ebenfalls in Tabelle II verzeichnet.

**Tabelle II**

| Beispiel | | 2 | 3 | 4 |
|---|---|---|---|---|
| I. | Emulgator A (vgl. Tab. I) (g) | 500 | 500 | 500 |
| | Styrol (g) | 3,0 | 5,0 | 7,0 |
| | Acrylsäure-n-butylester (g) | 7,0 | 5,0 | 3,0 |
| II. | Styrol (g) | 57,0 | 95,0 | 133,0 |
| | Acrylsäure-n-butylester (g) | 133,0 | 95,0 | 57,0 |
| | Konzentration (Gew.-%) | 25,8 | 25,2 | 25,7 |
| | Viskosität (bei 20° C) (mPa.s) | <50 | <50 | <50 |
| | pH-Wert | 4,0 | 4,1 | 4,1 |
| | Umsatz bezogen auf das Monomergemisch vor der Destillation (Gew.-%) | 99,5 | 99,8 | 99,7 |
| | Aussehen der kolliddispersen Lösung | leicht trüb | transparent | transparent |
| | Mittlerer Teilchendurchmesser $d_z$ (nm) | 38 ± 2 | 35 ± 2 | 30 ± 2 |

**Beispiele 5 und 6**

Die kolloiddispersen Leimungsmittel 5 und 6 werden wie die entsprechenden Leimungsmittel 3 und 4 hergestellt, wobei allerdings der Emulgator A gegen den Emulgator B (vgl. Tabelle I) ausgetauscht wird. Wie man in Tabelle III sieht, sind die physikalisch-chemischen Eigenschaften der kolloiddispersen Lösungen denen der Beispiele 2-4 äquivalent.

**Tabelle III**

| Beispiel | | 5 | 6 |
|---|---|---|---|
| I. | Emulgator B (vgl. Tabelle I) (g) | 500 | 500 |
| | Styrol (g) | 5,0 | 7,0 |
| | Acrylsäure-n-butylester (g) | 5,0 | 3,0 |
| II. | Styrol (g) | 95,0 | 133,0 |
| | Acrylsäure-n-butylester (g) | 95,0 | 57,0 |
| | Konzentration (Gew.-%) | 25,3 | 25,5 |
| | Viskosität (bei 20° C)(mPa.s) | <50 | <50 |
| | pH-Wert | 4,0 | 4,0 |
| | Umsatz bezogen auf das Monomergemisch vor der Destillation (Gew.-%) | ~99,8 | ~99,8 |
| | Aussehen der kolloiddispersen Lösung | transparent | leicht trüb |
| | mittlerer Teilchendurchmesser $d_z$ (nm) | 40 | 53 |

**Beispiele 7 und 8**

Die kolloiddispersen Leimungsmittel 7 und 8 werden wie die Leimungsmittel 2-4 hergestellt, wobei der Emulgator A beibehalten, aber Styrol bzw. Acrylsäure-n-butylester partiell gegen Acrylnitril ausgetauscht werden. In Tabelle IV sind die Zusammensetzungen der Monomermischungen und die physikalisch-chemischen Eigenschaften der kolloidalen Leimungsmittel aufgelistet.

**Tabelle IV**

| Beispiel | | 7 | 8 |
|---|---|---|---|
| I. | Emulgator A (vgl. Tabelle I) (g) | 500 | 500 |
| | Acrylnitril (g) | 2,5 | 3,3 |
| | Styrol (g) | 2,5 | 3,3 |
| | Acrylsäure-n-butylester (g) | 5,0 | 3,3 |
| II. | Acrylnitril (g) | 47,5 | 63,3 |
| | Styrol (g) | 47,5 | 63,3 |
| | Acrylsäure-n-butylester (g) | 95,0 | 63,3 |
| | pH-Wert | 3,9 | 3,9 |
| | Umsatz bezogen auf das Monomergemisch vor der Destillation (Gew.-%) | 99,7 | 99,6 |
| | Aussehen der kolloiddispersen Lösung | transparent | transparent |
| | mittlerer Teilchendurchmesser $d_z$ (nm) | 53 | 39 |

**Beispiele 9 und 10**

Die kolloiddispersen Leimungsmittel 9 und 10 werden wie die Leimungsmittel 2-4 hergestellt, wobei jedoch Emulgator A durch die Emulgatoren C und D (vgl. Tabelle I) in den in Tabelle V angegebenen Mengen ersetzt werden. In der Tabelle V sind neben den Monomermischungen noch die physikalisch-chemischen Eigenschaften der Papierleimungsmittel aufgelistet.

**Tabelle V**

| Beispiel | | 9 | 10 |
|---|---|---|---|
| I. | Emulgator C (g) | 500 | - |
| | Emulgator D (g) | - | 500 |
| | Styrol (g) | 5,0 | 5,0 |
| | Acrylsäure-n-butylester (g) | 5,0 | 5,0 |
| II. | Styrol (g) | 95,0 | 95,0 |
| | Acrylsäure-n-butylester (g) | 95,0 | 95,0 |
| | Konzentration (Gew.-%) | 25,7 | 25,5 |
| | Viskosität (bei 20°C) (mPa.s) | <50 | <50 |
| | pH-Wert | 3,3 | 3,5 |
| | Aussehen der kolloiddispersen Lösung | wenig trüb | wenig trüb |
| | mittlerer Teilchendurchmesser $d_z$ (nm) | 40 | 38 |

**Beispiel 11 und 12** (mit Hilfsemulgatoren)

In einem 2 l Vierhalskolben mit Rückflußkühler, Rührer, Gaseinlaß und -auslaß werden 400 g entionisiertes Wasser vorgelegt und gründlich unter Stickstoffatmosphäre ausgekocht. Danach wird auf 70°C abgekühlt und Mischung I (vgl. Tabelle VI) zudosiert. Nach gründlichem Durchspülen mit Stickstoff wird 0,5 g einer 35 gew.-%igen Wasserstoffperoxidlösung zugegeben. Nach weiteren 15 Minuten werden die Mischungen II und III in 2 Stunden gleichmäßig zudosiert. Bei 70°C wird anschließend 3 Stunden gerührt, dann mit 1 g Wasserstoffperoxidlösung (35 %ig) versetzt und 3 Stunden nachgerührt. Anschließend werden im Wasserstrahlvakuum 50 ml Lösungsmittel sowie Restmonomere abdestilliert und durch 50 ml entionisiertes Wasser ersetzt. Die physikalisch-chemischen Daten der Leimungsmittel sind in Tabelle VI aufgelistet.

**Tabelle VI**

| Beispiel | | 11 | 12 |
|---|---|---|---|
| I. | Emulgator A (g) | 500 | 500 |
| | Hilfsemulgator E+) (g) | 10 | - |
| | Hilfsemulgator F++) (g) | - | 10 |
| | Styrol (g) | 5,0 | 5,0 |
| | Acrylsäure-n-butylester (g) | 5,0 | 5,0 |
| II. | Styrol (g) | 95 | 95 |
| | Acrylsäure-n-butylester (g) | 95 | 95 |
| III. | Wasserstoffperoxid (35 %ig) (g) | 6,0 | 6,0 |
| | entionisiertes Wasser (g) | 100 | 100 |
| | Konzentration (Gew.-%) | 25,5 | 25,2 |
| | Viskosität (bei 20°C) (mPa.s) | <20 | <20 |
| | pH-Wert | 4,1 | 4,2 |
| | Aussehen der kolloiddispersen Lösung | nahezu transparent | nahezu transparent |
| | mittlerer Teilchendurchmesser (nm) | 48 | 52 |

**Erläuterung zu Tabelle VI**

+) Hilfsemulgator E: Umsetzungsprodukt von Benzylphenylphenol mit einem Hydroxylgruppen enthaltenden Polyether aus Ethylenoxid.

++) Hilfsemulgator F: Umsetzungsprodukt von Abietinsäure mit einem Hydroxylgruppen enthaltenden Polyether aus Ethylenoxid.

Als Leimungsflotte für die Oberflächenleimung wird eine Lösung von 5 Gew.-% Stärke (Perfectamyl® A4692 der Firma AVEBE) und 0,20 bzw. 0,25 Gew.-% des zu prüfenden Leimungsmittels (berechnet als Wirksubstanz) in 94,80 bzw. 94,75 Gew.-% Wasser verwendet.

Für die Leimung wird eine Laborleimpresse der Firma Werner Mathis, Zürich, Type HF eingesetzt. Die Leimungsflotte hat in der Leimpresse eine Temperatur von ca. 20°C. Das Papier wird mit einer Geschwindigkeit von 4 m/Minute durchgezogen.

Die Trocknung der oberflächengeleimten Papiere erfolgt auf einem Trockenzylinder innerhalb von ca. 45 sec. bei ca. 100°C. Vor der Leimungsprüfung werden die Papiere 2 Stunden bei Raumtemperatur klimatisiert. Die Prüfung der Leimung erfolgt nach DIN 53132. Dabei wird die Wasseraufnahme in g/m$^2$ nach einer Prufzeit von 60 Sekunden (Cobb$_{60}$) bestimmt.

**Anwendungsbeispiel I**

Dieses Beispiel zeigt die gute Wirksamkeit einiger Leimungsmittel auf Altpapier, sogenanntem Schrenzpapier I, dessen Zusammensetzung nicht näher definiert ist. Als Vergleichssubstanz wird ein Leimungsmittel gemäß EPS 0 058 313 (Leimungsmittel 2) - hier als M bezeichnet herangezogen.

Der pH-Wert im Stoffauflauf bei Schrenz I beträgt ca. 7, die Naßaufnahme in der Laborleimpresse ca. 60 Gew.-% und das Papiergewicht 100 g/m$^2$.

**Tabelle VII**

Oberflächenleimung auf Schrenzpapier I

| Leimungsmittel aus Beispiel: | $Cobb_{60}$ in $g/m^2$ bei Zusatz von 0,20 Gew.-% | 0,25 Gew.-% Leimungsmittel (bezogen auf reine Wirksubstanz) zur Flotte: |
|---|---|---|
| 3 | 23,9 | 23,3 |
| 5 | 24,5 | 24,0 |
| 7 | 27,5 | 26,7 |
| 9 | 24,2 | 23,7 |
| M | 57,2 | 36,3 |

Ohne Leimungsmittel beträgt die Wasseraufnahme 137 $g/m^2$.

**Anwendungsbeispiel II**

Dieses Beispiel zeigt wiederum die gute Wirksamkeit einer Reihe von Leimungsmitteln auf Schrenzpapier II, das eine ähnliche Zusammensetzung wie Schrenzpapier I aufweist.

Der pH-Wert im Stoffauflauf beträgt 6,5, die Naßaufnahme in der Laborleimpresse ca. 50 Gew.-% und das Papiergewicht 110 $g/m^2$.

**Tabelle VIII**

Oberflächenleimung auf Schrenzpapier II

| Leimungsmittel aus Beispiel: | $Cobb_{60}$ in $g/m^2$ bei Zusatz von 0,20 Gew.-% | 0,25 Gew.-% Leimungsmittel (bezogen auf reine Wirksubstanz) zur Flotte: |
|---|---|---|
| 3 | 27,4 | 26,1 |
| 5 | 28,9 | 27,3 |
| 7 | 35,2 | 32,2 |
| 9 | 26,9 | 25,8 |
| M | 48,3 | 39,5 |

Ohne Leimungsmittel beträgt die Wasseraufnahme 153 $g/m^2$.

**Patentansprüche**

1. Kationische Leimungsmittel für Papier in Form einer wäßrigen kolloiddispersen Lösung mit mittleren Teilchendurchmessern von 15 bis 200 nm, dadurch erhältlich, daß man im wäßrigen Medium eine wasserlösliche kationische, chemisch einheitlich aufgebaute Terpolymerverbindung aus

a) 7-40 Gew.-% N,N-Dimethylaminoethylacrylat und/oder -methacrylat,

b) 40-80 Gew.-% Styrol und

c) 4-40 Gew.-% Acrylnitril

auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-% - bezogen auf das folgende Monomergemisch - dieses Emulgators

d) 0 bis 90 Gew.-% Acrylnitril und/oder Methacrylnitril,
e) 5 bis 95 Gew.-% Styrol und
f) 5 bis 95 Gew.-% Acrylsäure- und/oder Methacrylsäureester mit 1 bis 12 C-Atomen im Alkoholrest - wobei die Summe der Komponenten d) bis f) stets 100 Gew.-% beträgt - emulgiert und die so erhaltene Emulsion einer radikalisch initiierten Emulsionspolymerisation bei Temperaturen von 20 bis 150° C unterwirft.

2. Leimungsmittel für Papier gemäß Anspruch 1, dadurch gekennzeichnet, daß die kationische, chemisch einheitlich aufgebaute Terpolymerverbindung aus
a) 8-30 Gew.-% N,N-Dimethylaminoethylacrylat und/oder -methacrylat,
b) 40-80 Gew.-% Styrol und
c) 5-35 Gew.-% Acrylnitril
besteht, wobei die Summe der Komponenten a) bis c) stets 100 Gew.-% beträgt, und das Monomergemisch aus
d) 0 bis 70 Gew.-% Acrylnitril bzw. Methacrylnitril,
e) 10 bis 80 Gew.-% Styrol und
f) 10 bis 80 Gew.-% Acrylsäure- und/oder Methacrylsäureestern mit 1 bis 12 C-Atomen im Alkoholrest besteht,
wobei die Summe der Komponenten d) bis f) 100 Gew.-% beträgt.

3. Leimungsmittel für Papier gemäß Anspruch 1, dadurch gekennzeichnet, daß man neben dem polymeren kationischen Emulgator gemäß Anspruch 1 einen kationischen und/oder nichtionogenen Hilfsemulgator in Mengen von 1 bis 40 Gew.-%, bezogen auf den vorstehendem kationischen Emulgator einsetzt, wobei der nichtionogene Emulgator die Formel
$R_1$-X-($CH_2$-$CH_2$-O)$_n$-H
besitzt, worin
X O, NH oder COO bedeutet,
$R_1$ ein höherer aliphatischer, cycloaliphatischer, araliphatischer oder aromatischer Kohlenwasserstoffrest mit 6-30 C-Atomen ist, und
n eine ganze Zahl $\geqslant$ 2 ist
und wobei der kationische Hilfsemulgator die Formel

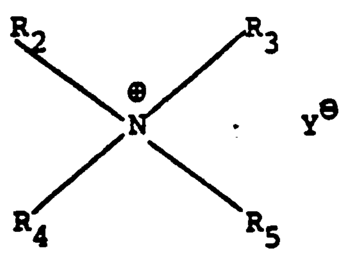 (III)

besitzt, wobei
$R_2$ und $R_3$ höhere aliphatische bzw. araliphatische Kohlenwasserstoffreste mit 6 bis 20 C-Atomen,
$R_4$ und $R_5$ niedere aliphatische Kohlenwasserstoffreste mit 1 bis 6 C-Atomen und
$Y^{\ominus}$ ein Halogenidion darstellen.

4. Leimungsmittel gemäß Anspruch 1, dadurch gekennzeichnet, daß das Gewichtsverhältnis zwischen polymeren kationischen Emulgator und Monomergemisch aus d) bis f) 1 : 4 bis 1 : 1 beträgt.

5. Leimungsmittel gemäß Anspruch 1, dadurch gekennzeichnet, daß die Emulsionspolymerisation mit wasserlöslichen, Radikale liefernden nichtionogenen Peroxiden und/oder Azoverbindungen, gegebenenfalls als Redoxysystem, in Mengen von 0,1 bis 5 Gew.-%, bezogen auf das Monomergemisch initiiert wird.

6. Leimungsmittel gemäß Anspruch 1, dadurch gekennzeichnet, daß die auspolymerisierten kolloiddispersen Lösungen mittlere Teilchendurchmesser zwischen 20 und 150 nm aufweisen.

7. Verfahren zur Herstellung von kationischen Leimungsmitteln in Form einer wäßrigen kolloiddispersen Lösung mit mittleren Teilchendurchmessern von 15 bis 200 nm, dadurch gekennzeichnet, daß man im wäßrigen Medium eine wasserlösliche kationische, chemisch einheitlich aufgebaute Terpolymerverbindung aus
a) 7-40 Gew.-% N,N-Dimethylaminoethylacrylat und/oder -methacrylat,
b) 40-80 Gew.-% Styrol und
c) 4-40 Gew.-% Acrylnitril
auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-% - bezogen auf das folgende Monomergemisch - dieses Emulgators
d) 0 bis 90 Gew.-% Acrylnitril bzw. Methacrylnitril,
e) 5 bis 95 Gew.-% Styrol und
f) 5 bis 95 Gew.-% Acrylsäure- und/oder Methacrylsäureester mit 1 bis 12 C-Atomen im Alkoholrest
-wobei die Summe aus d) bis f) 100 Gew.-% beträgt- emulgiert und die so erhaltene Emulsion einer radikalisch initiierten Emulsionspolymerisation bei Temperaturen von 20 bis 150° C unterwirft.

## Claims

1. Cationic sizing agents for paper, in the form of an aqueous colloid-disperse solution having mean particle diameters of 15 to 200 nm, which can be obtained by dissolving a water-soluble cationic chemically uniformly structured terpolymer compound consisting of
a) 7-40 % by weight of N,N-dimethylaminoethyl acrylate and/or methacrylate,
b) 40-80 % by weight of styrene and
c) 4-40 % by weight of acrylonitrile in an aqueous medium, the sum of the components a) to c) always being 100 % by weight and at least 10 % of the N,N-dimethylamino groups of the terpolymer being quaternised and the remainder being protonated, and by emulsifying, in the presence of 10 to 70 % by weight - relative to the following monomer mixture - of this emulsifier,
d) 0 to 90 % by weight of acrylonitrile and/or methacrylonitrile,
e) 5 to 95 % by weight of styrene and
f) 5 to 95 % by weight of acrylates and/or methacrylates having 1 to 12 C atoms in the alcohol radical - the sum of the components d) to f) always being 100 % by weight - and subjecting the emulsion thus obtained to radical-initiated emulsion polymerisation at temperatures from 20 to 150°C.

2. Sizing agents for paper according to Claim 1, characterised in that the cationic chemically uniformly structured terpolymer compound consists of
a) 8-30 % by weight of N,N-dimethylaminoethyl acrylate and/or methacrylate,
b) 40-80 % by weight of styrene and
c) 5-35 % by weight of acrylonitrile, the sum of the components a) to c) always being 100 % by weight, and the monomer mixture consists of
d) 0 to 70 % by weight of acrylonitrile or methacrylonitrile,
e) 10 to 80 % by weight of styrene and
f) 10 to 80 % by weight of acrylates and/or methacrylates having 1 to 12 C atoms in the alcohol radical, the sum of the components d) to f) being 100 % by weight.

3. Sizing agents for paper according to Claim 1, characterised in that a cationic and/or a non-ionic auxiliary emulsifier is employed in addition to the polymeric cationic emulsifier according to Claim 1, in amounts of 1 to 40 % by weight, relative to the above cationic emulsifier, the non-ionic emulsifier having the formula

$R_1$-X-$(CH_2$-$CH_2$-$O)_n$-H

wherein
X denotes O, NH or COO,
$R_1$ is a higher aliphatic, cycloaliphatic, araliphatic or aromatic hydrocarbon radical having 6- 30 C atoms, and
n is an integer $\geq 2$,
and the cationic auxiliary emulsifier having the formula

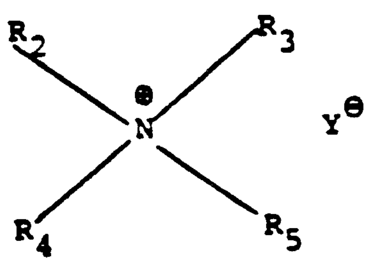

(III)

wherein
$R_2$ and $R_3$ represent higher aliphatic or araliphatic hydrocarbon radicals having 6 to 20 C atoms, $R_4$ and $R_5$ represent lower aliphatic hydrocarbon radicals having 1 to 6 C atoms and
$Y^{\ominus}$ represents a halide ion.

4. Sizing agents according to Claim 1, characterised in that the weight ratio between the polymeric cationic emulsifier and the monomer mixture of d) to f) is 1 : 4 to 1 : 1.

5. Sizing agents according to Claim 1, characterised in that the emulsion polymerisation is initiated with water-soluble non-ionic peroxides and/or azo compounds which donate radicals, if appropriate as a redox system, in amounts of 0.1 to 5 % by weight, relative to the monomer mixture.

6. Sizing agents according to Claim 1, characterised in that the completely polymerised colloid-disperse solutions have mean particle diameters between 20 and 150 nm.

7. Process for the preparation of cationic sizing agents in the form of an aqueous colloid-disperse solution having mean particle diameters of 15 to 200 nm, characterised in that a water-soluble cationic chemically uniformly structured terpolymer compound consisting of
a) 7-40 % by weight of N,N-dimethylaminoethyl acrylate and/or methacrylate,
b) 40-80 % by weight of styrene and
c) 4-40 % by weight of acrylonitrile is dissolved in an aqueous medium, the sum of the components a) to c)

always being 100 % by weight and at least 10 % of the N,N-dimethylamino groups of the terpolymer being quaternised and the remainder being protonated, and, in the presence of 10 to 70 % by weight- relative to the following monomer mixture of this emulsifier,

d) 0 to 90 % by weight of acrylonitrile and/or methacrylonitrile,

e) 5 to 95 % by weight of styrene and

f) 5 to 95 % by weight of acrylates and/or methacrylates having 1 to 12 C atoms in the alcohol radical, - the sum of d) to f) being 100 % by weight - are emulsified, and the emulsion thus obtained is subjected to radical-initiated emulsion polymerisation at temperatures from 20 to 150° C.

**Revendications**

1. Colle cationique pour papier, à l'état de solution aqueuse colloïdale à des diamètres de particule moyen de 15 à 200 nm, obtenue par dissolution en milieu aqueux d'un copolymère ternaire cationique soluble dans l'eau, à structure chimique homogène, de

a) 7 à 40 % en poids d'acrylate et/ou méthacrylate de N,N-diméthylaminoéthyle,

b) 40 à 80 % en poids de styrène, et

c) 4 à 40 % en poids d'acrylonitrile,

la somme des composants a) à c) étant toujours de 100 % en poids, et au moins 10 % des groupes N,N-diméthylamino du copolymère ternaire étant quaternisés protonisés, mise en émultion, en présence de 10 à 70 % en poids - par rapport au mélange de monomères suivant - de cet agent émulsionnant, de

d) 0 à 90 % en poids d'acrylonitrile et/ou de méthacrylonitrile,

e) 5 à 95 % en poids de styrène et

f) 5 à 95 % en poids d'esters acryliques et/ou méthacryliques contenant 1 à 12 atomes de carbone dans le radical alcoolique - la somme des composants d) à f) étant tojours de 100 % en poids - et polymérisation radicalaire en émulsion de l'émulsion ainsi obtenue à des températures de 20 à 150° C.

2. Colle pour papier selon la revendication 1, caractérisée en ce que le copolymère ternaire cationique à structure chimique homogène consiste en

a) 8 à 30 % en poids d'acrylate et/ou de méthacrylate de N,N-diméthylaminoéthyle,

b) 40 à 80 % en poids de styrène et

c) 5 à 55 % en poids d'acrylonitrile,

la somme des composants a) à c) étant toujours de 100 % en poids,

et le mélange de monomères consiste en

d) 0 à 70 % en poids d'acrylonitrile ou de méthacrylonitrile,

e) 10 à 80 % en poids de styrène et

f) 10 à 80 % en poids d'esters acryliques et/ou méthacryliques contenant 1 à 12 atomes de carbone dans le radical alcoolique, la somme des composants d) à f) étant de 100 % en poids.

3. Colle pour papier selon la revendication 1, caractérisée en ce que, en plus de l'agent émulsionnant cationique polymère selon la revendication 1, on utilise un agent émulsionnant auxiliaire cationique et/ou non ionique en quantité de 1 à 40 % en poids, par rapport à l'agent émulsionnant cationique ci-dessus, l'agent émulsionnant non ionique répondant à la formule

$R_1$-X-$(CH_2$-$CH_2$-$O)_n$-H

dans laquelle

X représente O, NH ou COO,

$R_1$ représente un reste hydrocarboné aliphatique supérieur, cycloaliphatique, araliphatique ou aromatique contenant 0 à 30 atomes de carbone et

n est un nombre entier supérieur ou égal à 2,

et l'agent émulsionnant auxiliaire cationique répondant à la formule

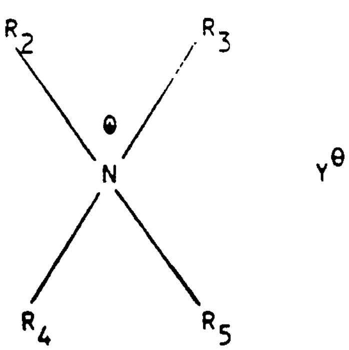

(III)

dans laquelle $R_2$ et $R_3$ représentent des restes hudrocarbonés aliphatiques supérieurs ou araliphatiques contenant 6 à 20 atomes de carbone, $R_4$ et $R_5$ représentent des restes hydrocarbonés aliphatiques inférieurs en $C_1$-$C_6$ et

$Y^{\ominus}$ représente un ion halogénure.

4. Colle selon la revendication 1, caractérisée en ce que les proportions relatives en poids entre l'agent émulsionnant cationique polymère et le mélange des monomères d) à f) sont de 1 : 4 à 1 : 1.

5. Colle selon la revendication 1, caractérisée en ce que la polymérisation en émulsion est déclenchée au moyen de peroxydes et/ou de composés azoïques non ioniques solubles dans l'eau fournissant des radicaux libres, le cas échéant sous forme d'un système redox, en quantité de 0,1 à 5 % en poids par rapport au mélange des monomères.

6. Colle selon la revendication 1, caractérisée en ce que les solutions colloïdales entièrement polymérisées ont des diamères de particules moyens de 20 à 150 nm.

7. Procédé de préparation de colles cationiques à l'état de solutions aqueuses colloïdales à des diamètres de particules moyens de 15 à 200 nm, caractérisé en ce que l'on dissout dans un milieu aqueux, un copolymère ternaire cationique soluble dans l'eau à structure chimique uniforme, de

a) 7 à 40 % en poids d'acrylate et/ou de méthacrylate de N,N-diméthylaminoéthyle,

b) 40 à 80 % en poids de styrène et

c) 4 à 40 % en poids d'acrylonitrile,

la somme des composants a) à c) étant toujours de 100 % en poids, et au moins 10 % des groupes N,N-diméthylamino du copolymère ternaire étant quaternisés et les autres protonisés, on émulsionne en présence de 10 à 70 % en poids - par rapport au mélange de monomères ci-après - de cet agent émulsionnant

d) 0 à 90 % en poids d'acrylonitrile ou de méthacrylonitrile,

e) 5 à 95 % en poids de styrène et

f) 5 à 95 % en poids d'esters acryliques et/ou méthacryliques contenant 1 à 12 atomes de carbone dans le radical alcoolique,

la somme de d) à f) étant de 100 % en poids, et on soumet l'émulsion obtenue à une polymérisation radicalaire en émulsion à des températures de 20 à 150° C.